# EUROPÄISCHE PATENTSCHRIFT

(11) **EP 2 562 044 B1**
(45) Veröffentlichungstag und Bekanntmachung des Hinweises auf die Patenterteilung: **11.09.2019**
(21) Anmeldenummer: 12174692.9
(22) Anmeldetag: 03.07.2012
(51) Int. Cl.: B60Q 1/18, B60Q 1/08, B60Q 1/52

(54) **Verfahren zur Steuerung einer Lichtaussendung eines Scheinwerfers eines Fahrzeugs**
Method for controlling a light emission of a headlamp of a vehicle
Procédé de régulation de l'émission lumineuse d'un phare de véhicule

(30) Priorität: 23.08.2011 DE 102011081360
(43) Veröffentlichungstag der Anmeldung: 27.02.2013
(73) Patentinhaber: ROBERT BOSCH GMBH, 70442 Stuttgart (DE)
(72) Erfinder: Mohamed, Manoj, 695009 Trivandrum, Kerala (IN)

(56) Entgegenhaltungen:
- EP-A2- 1 506 893
- DE-A1- 10 060 734
- DE-A1-102009 020 910
- GB-A- 2 395 390
- JP-A- 2009 120 147
- JP-A- 2011 084 106
- US-A1- 2010 188 864

## Beschreibung

### Stand der Technik

Die vorliegende Erfindung bezieht sich auf ein Verfahren zur Steuerung einer Lichtaussendung eines Scheinwerfers eines Fahrzeugs, auf eine Vorrichtung, die ausgebildet ist, um die Schritte eines solchen Verfahrens durchzuführen, sowie auf ein Computerprogrammprodukt mit Programmcode zur Durchführung eines solchen Verfahrens, wenn das Programm auf einer solchen Vorrichtung ausgeführt wird.

Seitenaufprallwarnung (SCW, Side Crash Warning) ist eine Funktion, die von der Seite kommenden Verkehr, der möglicherweise zu einem Seitenaufprall führen könnte, erfassen und den Fahrer warnen kann, um eine Gegenmaßnahme ergreifen zu können.

Die DE 10 2008 008 884 A1 offenbart ein Fahrzeugleuchtensystem mit einer Erfassungseinrichtung zur Erfassung eines Raumwinkels, in dem sich ein Verkehrsteilnehmer befindet, mit einer Leuchteinrichtung zum Abstrahlen von Signallicht mit einer raumwinkelabhängigen spektralen Verteilung und/oder einer raumwinkelabhängigen Intensität, mit einem Signalisierungsbedienelement und mit einer Steuereinrichtung, die mit der Erfassungseinrichtung, der Leuchteinrichtung und dem Signalisierungsbedienelement gekoppelt ist und die derart eingerichtet ist, dass die raumwinkelabhängige Intensität und/oder die raumwinkelabhängige spektrale Verteilung des abgestrahlten Lichtes als Reaktion auf die Betätigung des Signalisierungsbedienelementes und die Erfassung eines Raumwinkels, in dem sich ein Verkehrsteilnehmer befindet, variiert wird.

Die DE 10 2009 020 910 A1 offenbart ein Scheinwerfersystem für ein Fahrzeug mit einem Bildgeber, wobei von einer Lichtquelle emittiertes Licht den Bildgeber durchstrahlt und mittels einer Steuervorrichtung in Abhängigkeit von durch eine Umfelderfassungsvorrichtung im Umfeld des Fahrzeugs detektierten Objekten Transmissionsgrade des Bildgebers bereichsabhängig veränderbar sind. In der JP 2011 084106 A ist ein Beleuchtungssystem mit Richtungssteuerung gezeigt, das zum Durchführen einer Beleuchtung in der Lage ist, um bewegliche Körper um das eigene Fahrzeug herum auf das eigene Fahrzeug aufmerksam zu machen. Die US 2010/188864 A1 beschreibt ein adaptives Außenbeleuchtungssystem für ein Fahrzeug mit zumindest einem Rendering-System zum Rendering von Daten eines interessierenden Objektes unter Verwendung des Außenbeleuchtungssystems des Fahrzeugs. In der GB 2 395 390 A ist ein aktives Projektionssystem bzw. eine Vorrichtung zur Umgebungsbeleuchtung gezeigt, wobei ermöglicht wird, die Sichtbarkeit von Objekten zu erhöhen.

### Offenbarung der Erfindung

Vor diesem Hintergrund werden mit der vorliegenden Erfindung ein Verfahren zur Steuerung einer Lichtaussendung eines Scheinwerfers eines Fahrzeugs, eine Vorrichtung, die ausgebildet ist, um die Schritte eines solchen Verfahrens durchzuführen, sowie ein Computerprogrammprodukt mit Programmcode zur Durchführung eines solchen Verfahrens, wenn das Programm auf einer solchen Vorrichtung ausgeführt wird, gemäß den unabhängigen und nebengeordneten Patentansprüchen vorgestellt. Vorteilhafte Ausgestaltungen ergeben sich aus den jeweiligen Unteransprüchen und der nachfolgenden Beschreibung.

Die vorliegende Erfindung schafft ein Verfahren zur Steuerung einer Lichtaussendung zumindest eines Scheinwerfers eines Fahrzeugs, wobei das Verfahren folgende Schritte aufweist:
Einlesen eines Seitenaufprallwarnsignals, wobei das Seitenaufprallwarnsignal eine Gefahr eines Seitenaufpralls für das Fahrzeug durch ein Fremdfahrzeug repräsentiert;
Erzeugen eines Ansteuersignals unter Verwendung des Seitenaufprallwarnsignals und einer Positionsinformation, wobei die Positionsinformation eine Position des Fremdfahrzeugs relativ zu dem Fahrzeug repräsentiert; und
Ansteuern der Lichtaussendung des zumindest einen Scheinwerfers basierend auf dem Ansteuersignal, um das Fremdfahrzeug mittels des zumindest einen Scheinwerfers zu beleuchten.

Bei dem Fahrzeug kann es sich um ein Kraftfahrzeug handeln, insbesondere ein straßengebundenes Kraftfahrzeug, beispielsweise einen Personenkraftwagen, Lastkraftwagen, ein Fahrzeug zum Personentransport oder ein sonstiges Nutzfahrzeug. Bei dem zumindest einen Scheinwerfer kann es sich beispielsweise um einen Frontscheinwerfer des Fahrzeugs handeln. Die Lichtaussendung des Scheinwerfers kann hierbei in Stufen oder stufenlos veränderbar sein. Die Lichtaussendung des Scheinwerfers kann dabei hinsichtlich der Abstrahlcharakteristik des Scheinwerfers verändert werden. Die Abstrahlcharakteristik kann eine Helligkeit, einen Leuchtwinkel, eine Breite oder Größe des auszuleuchtenden Fahrbahnbereichs vor dem Fahrzeug, eine Leuchthöhe, ein Beleuchtungsmuster, eine Zuschaltung oder Abschaltung von Leuchtmitteln und/oder dergleichen betreffen, die eine Lichtaussendung durch die Scheinwerfer charakterisieren. Das Seitenaufprallwarnsignal kann eingelesen werden, wenn eine Gefahr eines Seitenaufpralls für das Fahrzeug durch ein Fremdfahrzeug besteht. Alternativ oder zusätzlich kann das Seitenaufprallwarnsignal einen ersten logischen Wert aufweisen, wenn eine Gefahr eines Seitenaufpralls für das Fahrzeug durch ein Fremdfahrzeug besteht, und kann das Seitenaufprallwarnsignal einen zweiten logischen Wert aufweisen, wenn keine Gefahr eines Seitenaufpralls für das Fahrzeug durch ein Fremdfahrzeug besteht. Dann kann beispielsweise das Ansteuersignal erzeugt und somit die Lichtaussendung angesteuert werden, wenn das Seitenaufprallwarnsignal den ersten logischen Wert aufweist bzw. eine Gefahr eines Seitenaufpralls für das Fahrzeug durch ein Fremdfahrzeug besteht. Die Positionsinformation kann beispielsweise in dem Seitenaufprallwarnsignal oder einem Positionssignal von einer Positionserfassungseinrichtung enthalten sein.

Die vorliegende Erfindung schafft ferner eine Vorrichtung, die ausgebildet ist, um die Schritte des erfindungsgemäßen Verfahrens durchzuführen bzw. umzusetzen. Insbesondere kann die Vorrichtung Einrichtungen aufweisen, die ausgebildet sind, um die Schritte des Verfahrens auszuführen. Auch durch diese Ausführungsvariante der Erfindung in Form einer Vorrichtung kann die der Erfindung zugrunde liegende Aufgabe schnell und effizient gelöst werden.

Unter einer Vorrichtung kann vorliegend ein elektrisches Gerät bzw. Steuergerät verstanden werden, das Sensorsignale verarbeitet und in Abhängigkeit davon Steuersignale ausgibt. Die Vorrichtung kann eine Schnittstelle aufweisen, die hardwaremäßig und/oder softwaremäßig ausgebildet sein kann. Bei einer hardwaremäßigen Ausbildung können die Schnittstellen beispielsweise Teil eines sogenannten System-ASICs sein, der verschiedenste Funktionen der Vorrichtung beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Von Vorteil ist auch ein Computerprogrammprodukt mit Programmcode, der auf einem maschinenlesbaren Träger wie einem Halbleiterspeicher, einem Festplattenspeicher oder einem optischen Speicher gespeichert ist und zur Durchführung des Verfahrens nach einem der vorstehend beschriebenen Ausführungsformen verwendet wird, wenn das Programm auf einer Vorrichtung ausgeführt wird.

Die Erfindung basiert auf der Erkenntnis, dass eine Steuerung einer Lichtaussendung zumindest eines Scheinwerfers eines Fahrzeugs, beispielsweise auch eine Adaption von intelligenten Fahrzeuglichtsystemen, vorteilhaft auf der Basis eines Seitenaufprallwarnsignals erfolgen kann. Somit kann auf eine Seitenaufprallwarnung beispielsweise mit angepasster Beleuchtung bzw. Lichtaussendung reagiert werden. Somit kann beispielsweise eine Seitenaufprallwarnung (SCW, Side Crash Warning) insbesondere mit einer intelligenten Scheinwerfersteuerung (IHC, Intelligent Headlight Control) verknüpft werden. Die vorliegende Erfindung stellt eine Verbesserung der SCW-Funktion dar, indem eine Verknüpfung mit z. B. IHC geschaffen wird.

Ein Vorteil der vorliegenden Erfindung liegt darin, dass für einen Fahrer eine bessere Beleuchtung des Fahrzeugs, mit dem ein Zusammenstoß droht, und somit eine möglichst frühzeitige und optimale Sicht auf eine Gefahrensituation geschaffen wird. Zusätzlich oder alternativ wird ein an dem potentiellen Seitenaufprall beteiligter Fahrer des Fremdfahrzeugs durch die Lichtaussendung des Fahrzeugs vor der Gefahr gewarnt. Somit kann eine Verkehrssicherheit erhöht bzw. kann ein Unfallrisiko gesenkt werden. Zudem stellt die Steuerung der Lichtaussendung unter Verwendung des Seitenaufprallwarnsignals eine kostengünstige und Platz sparende Lösung dar, weil zumindest zum Teil auch bereits vorhandene Eingangsgrößen und Einrichtungen verwendet werden können.

Gemäß einer Ausführungsform kann im Schritt des Einlesens das Seitenaufprallwarnsignal von einer optischen Erfassungseinrichtung und/oder einer Radarerfassungseinrichtung empfangen werden. Bei der optischen Erfassungseinrichtung kann es sich um eine Fahrzeugkamera handeln, beispielsweise eine Videokamera oder Standbildkamera. Die optische Erfassungseinrichtung kann dabei mit einer Bildverarbeitungselektronik beispielsweise in Gestalt einer geeigneten Mustererkennung, Objekterkennung bzw. einem geeigneten Erkennungsalgorithmus verbunden sein oder eine Bildverarbeitungselektronik aufweisen. Die optische Erfassungseinrichtung kann Bilddaten erzeugen, die analysiert werden können, um eine Gefahr eines Seitenaufpralls durch ein Fremdfahrzeug zu erkennen. Die Radarerfassungseinrichtung kann ausgebildet sein, um eine Information über eine Bewegung eines Fremdfahrzeugs bzw. eine Gefahr eines Seitenaufpralls durch ein Fremdfahrzeug zu erzeugen. Eine solche Ausführungsform bietet den Vorteil, dass auf diese Weise eine Gefahr eines Seitenaufpralls zuverlässig erkannt werden kann. Zudem können Einrichtungen genutzt werden, die bereits in dem Fahrzeug verbaut sind, wodurch Anforderungen an Platz und Kosten gering gehalten werden können.

Auch kann im Schritt des Ansteuerns die Lichtaussendung des zumindest einen Scheinwerfers in Richtung des Fremdfahrzeugs gelenkt werden. Zusätzlich oder alternativ kann im Schritt des Ansteuerns die Lichtaussendung des zumindest einen Scheinwerfers aktiviert werden. Insbesondere kann eine Abstrahlcharakteristik der Lichtaussendung des zumindest einen Scheinwerfers verändert werden, so dass das Fremdfahrzeug durch Licht des zumindest einen Scheinwerfers beleuchtet wird. Wenn der zumindest eine Scheinwerfer zu einem Zeitpunkt des Einlesens des Seitenaufprallwarnsignals nicht aktiv bzw. eingeschaltet ist, kann der zumindest eine Scheinwerfer im Schritt des Ansteuerns aktiviert bzw. eingeschaltet werden. Somit kann das Ansteuersignal auch eine Information bzw. einen Befehl umfassen, die Lichtaussendung des zumindest einen Scheinwerfers im Schritt des Ansteuerns zu aktivieren, falls dieselbe nicht aktiv ist. Eine solche Ausführungsform bietet den Vorteil, dass zum einen die Lichtaussendung exakt und zuverlässig angesteuert werden kann um das Fremdfahrzeug zu beleuchten, und zum anderen auch bei zunächst ausgeschaltetem Scheinwerfer das Fremdfahrzeug als potentieller Unfallpartner durch Aktivieren und Lenken der Lichtaussendung aufmerksam gemacht werden kann.

Dabei kann im Schritt des Ansteuerns eine Lichtaussendung zumindest eines Frontscheinwerfers des Fahrzeugs und/oder eine Lichtaussendung eines Seitenaufprallwarnscheinwerfers des Fahrzeugs angesteuert werden. Somit kann es sich bei dem zumindest einen Scheinwerfer um einen Frontscheinwerfer und zusätzlich oder alternativ um einen speziellen Seitenaufprallwarnscheinwerfer handeln. Der Seitenaufprallwarnscheinwerfer kann getrennt von einer Frontscheinwerfereinheit angeordnet sein oder in dieselbe integriert sein. Der Seitenaufprallwarnscheinwerfer ist ausgebildet, um ein Fremdfahrzeug, von dem eine Gefahr eines Seitenaufpralls ausgeht, zu beleuchten. Dazu kann die Lichtaussendung des Seitenaufprallwarnscheinwerfers aktiviert und in Richtung des Fremdfahrzeugs gelenkt werden. Beispielsweise kann entweder die Lichtaussendung des Seitenaufprallwarnscheinwerfers und die Lichtaussendung des zumindest einen Frontscheinwerfers angesteuert werden oder es kann eine der beiden Lichtaussendungen angesteuert werden. Eine solche Ausführungsform bietet den Vorteil, dass je nach baulichen Voraussetzungen des Fahrzeugs zumindest ein bereits vorhandener Scheinwerfer des Fahrzeugs und zusätzlich oder alternativ ein zur Seitenaufprallwarnung vorgesehener Scheinwerfer genutzt werden kann, um vor der Gefahr zu warnen. Somit kann vor der Gefahr eines Seitenaufpralls mit zumindest einem Frontscheinwerfer und dem zusätzlichen Scheinwerfer noch wirksamer gewarnt werden oder mit dem zusätzlichen Scheinwerfer wirksamer vor der Gefahr gewarnt werden wobei der zumindest eine Frontscheinwerfer beispielsweise bei Nacht in seiner Lichtaussendung nicht verändert werden muss. Somit kann die Gefahrenwarnung wirksamer und flexibler gemacht werden.

Ferner kann ein Schritt des Bestimmens der Positionsinformation basierend auf Bilddaten und/oder Radardaten vorgesehen sein. Dabei können im Schritt des Erzeugens das Seitenaufprallwarnsignal und die bestimmte Positionsinformation verwendet werden, um das Ansteuersignal zu erzeugen. Dabei kann die Positionsinformation unter Verwendung einer geeigneten Auswertungselektronik bzw. eines geeigneten Auswertungsalgorithmus aus den Bilddaten und/oder Radardaten berechnet werden. Eine solche Bestimmung der Positionsinformation bietet den Vorteil, dass die berechnete bzw. bestimmte Positionsinformation exakt und zuverlässig die Position des Fremdfahrzeugs relativ zu dem Fahrzeug repräsentieren kann. Zudem besteht die Möglichkeit einer fortwährenden Aktualisierung der Position durch wiederholte Ausführung des Schrittes des Bestimmens. Somit kann basierend auf dem Ansteuersignal die Lichtaussendung des zumindest einen Scheinwerfers exakt und zuverlässig gesteuert werden.

Zudem kann ein Schritt des Aussendens von Licht mittels des zumindest einen Scheinwerfers ansprechend auf den Schritt des Ansteuerns vorgesehen sein. Der Schritt des Aussendens kann mittels einer Scheinwerfereinheit bzw. Scheinwerferbaugruppe durchgeführt werden. Somit kann das Licht des zumindest einen Scheinwerfers basierend auf dem Ansteuersignal ausgesendet werden. Eine solche Aussendung des Lichts bietet den Vorteil, dass das Fremdfahrzeug als potentielle Gefahrenquelle kenntlich gemacht werden kann.

Des Weiteren kann ein Schritt des Verifizierens, ob das Fremdfahrzeug mittels des zumindest einen Scheinwerfers beleuchtet wird, unter Verwendung einer optischen Erfassungseinrichtung vorgesehen sein. Anders ausgedrückt kann der Schritt des Verifizierens beispielsweise eine kamerabasierte Überprüfung darstellen, ob das Fremdfahrzeug mittels des zumindest einen Scheinwerfers korrekt beleuchtet wird. Wenn im Schritt des Verifizierens festgestellt wird, dass das Fremdfahrzeug mittels des zumindest einen Scheinwerfers nicht korrekt beleuchtet wird, kann die Positionsinformation neu bestimmt werden, das Ansteuersignal neu erzeugt werden und/oder die Lichtaussendung neu angesteuert werden, um das Fremdfahrzeug mittels des zumindest einen Scheinwerfers korrekt zu beleuchten. Eine solche Verifizierung bietet den Vorteil, dass eine möglicherweise fehlerhafte Scheinwerferansteuerung erkannt und korrigiert werden kann. Somit steigt die Verkehrssicherheit, da noch zuverlässiger vor der Gefahr eines Seitenaufpralls gewandt werden kann.

Die Erfindung wird anhand der beigefügten Zeichnungen beispielhaft näher erläutert. Es zeigen:
- Fig. 1: eine schematische Darstellung eines Fahrzeugs mit einer Steuervorrichtung gemäß einem Ausführungsbeispiel der vorliegenden Erfindung;
- Fig. 2: ein Ablaufdiagramm eines Verfahrens gemäß einem Ausführungsbeispiel der vorliegenden Erfindung; und
- Figuren 3 bis 5: schematische Darstellungen von Verkehrssituationen mit einer Gefahr eines Seitenaufpralls zwischen einem Fahrzeug und einem Fremdfahrzeug.

Gleiche oder ähnliche Elemente können in den Figuren durch gleiche oder ähnliche Bezugszeichen versehen sein, wobei auf eine wiederholte Beschreibung verzichtet wird. Ferner enthalten die Figuren der Zeichnungen, deren Beschreibung sowie die Ansprüche zahlreiche Merkmale in Kombination. Einem Fachmann ist dabei klar, dass diese Merkmale auch einzeln betrachtet werden oder sie zu weiteren, hier nicht explizit beschriebenen Kombinationen zusammengefasst werden können. Weiterhin ist die Erfindung in der nachfolgenden Beschreibung eventuell unter Verwendung von unterschiedlichen Maßen und Dimensionen erläutert, wobei die Erfindung nicht auf diese Maße und Dimensionen eingeschränkt zu verstehen ist. Ferner können erfindungsgemäße Verfahrensschritte wiederholt sowie in einer anderen als in der beschriebenen Reihenfolge ausgeführt werden. Umfasst ein Ausführungsbeispiel eine "und/oder"-Verknüpfung zwischen einem ersten Merkmal / Schritt und einem zweiten Merkmal / Schritt, so kann dies so gelesen werden, dass das Ausführungsbeispiel gemäß einer Ausführungsform sowohl das erste Merkmal / den ersten Schritt als auch das zweite Merkmal / den zweiten Schritt und gemäß einer weiteren Ausführungsform entweder nur das erste Merkmal /Schritt oder nur das zweite Merkmal /Schritt aufweist.

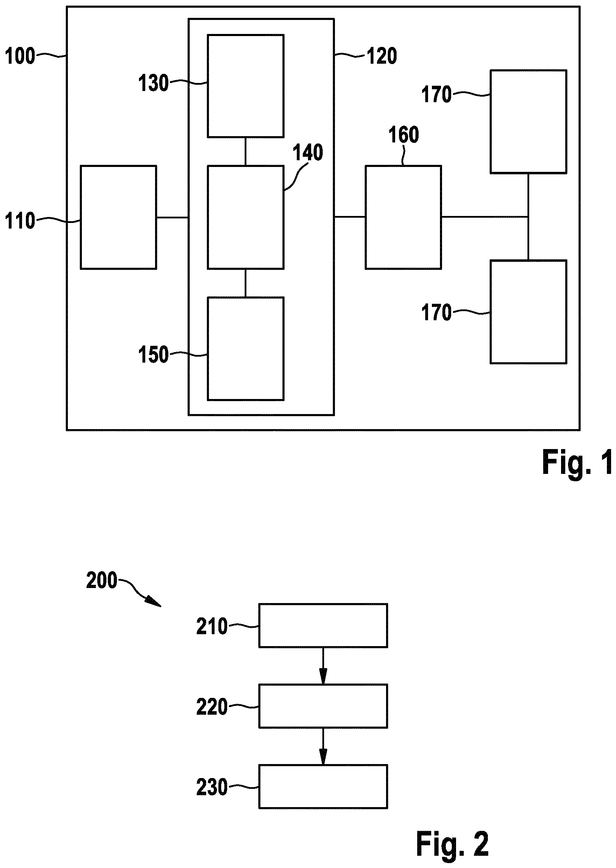

Fig. 1 zeigt eine schematische Darstellung eines Fahrzeugs mit einer Steuervorrichtung gemäß einem Ausführungsbeispiel der vorliegenden Erfindung. Das Fahrzeug 100 weist eine Fahrzeugkamera 110, eine Steuervorrichtung 120 mit einer Einleseeinrichtung 130, einer Erzeugungseinrichtung 140 sowie einer Ansteuereinrichtung 150, ein Scheinwerfersteuergerät 160 und zwei Scheinwerfer 170 auf. Die Fahrzeugkamera 110 ist mit der Steuervorrichtung 120 über eine Kommunikationsschnittstelle, beispielsweise zumindest eine Signalleitung oder dergleichen verbunden. Das Scheinwerfersteuergerät 160 ist mit der Steuervorrichtung 120 über eine weitere Kommunikationsschnittstelle, beispielsweise zumindest eine Signalleitung oder dergleichen, verbunden. Somit ist die Steuervorrichtung 120 zwischen die Fahrzeugkamera 110 und das Scheinwerfersteuergerät 160 geschaltet. Die Scheinwerfer 170 sind mit dem Scheinwerfersteuergerät 160 über eine weitere Kommunikationsschnittstelle, beispielsweise zumindest eine Signalleitung oder dergleichen verbunden. Somit ist das Scheinwerfersteuergerät 160 zwischen die Steuervorrichtung 120 und die Scheinwerfer 170 geschaltet. Auch wenn es in Fig. 1 so nicht dargestellt ist, kann das Ansteuergerät 160 auch ein Teil der Steuervorrichtung 120 sein oder kann die Steuervorrichtung 120 auch ein Teil des Scheinwerfersteuergerätes 160 sein.

Die Fahrzeugkamera 110 kann beispielsweise eine Bildverarbeitungselektronik für geeignete Verfahren zur Bildverarbeitung, Bildanalyse, Mustererkennung, Objekterkennung und/oder eine sonstige Signalverarbeitungselektronik, etc. aufweisen oder mit derselben verbunden sein. Die Fahrzeugkamera 110 ist gemäß dem in Fig. 1 gezeigten Ausführungsbeispiel ausgebildet, um ein Seitenaufprallwarnsignal zu erzeugen, wobei das Seitenaufprallwarnsignal eine Gefahr eines Seitenaufpralls für das Fahrzeug 100 durch ein Fremdfahrzeug repräsentiert. Verschiedene logische Werte des Seitenaufprallwarnsignals können ein Vorliegen bzw. Nichtvorliegen einer Gefahr eines Seitenaufpralls für das Fahrzeug 100 durch ein Fremdfahrzeug repräsentieren. Die Fahrzeugkamera 110 ist ausgebildet, um das Seitenaufprallwarnsignal an die Steuervorrichtung 120 auszugeben.

Die Steuervorrichtung 120 weist die Einleseeinrichtung 130, die Erzeugungseinrichtung 140 sowie die Ansteuereinrichtung 150 auf. Die Steuervorrichtung 120 kann ausgebildet sein, um das Seitenaufprallwarnsignal von der Fahrzeugkamera 110 zu empfangen. Die Steuervorrichtung 120 ist ausgebildet, um eine Steuerung einer Lichtaussendung der Scheinwerfer 170 des Fahrzeugs 100 zu bewirken bzw. durchzuführen.

Die Einleseeinrichtung 130 ist ausgebildet, um das Seitenaufprallwarnsignal einzulesen. Wenn das Seitenaufprallwarnsignal einen logischen Wert aufweist, der ein Vorliegen einer Gefahr eines Seitenaufpralls für das Fahrzeug 100 durch ein Fremdfahrzeug repräsentiert, kann die Einleseeinrichtung 130 ausgebildet sein, das Seitenaufprallwarnsignal an die Erzeugungseinrichtung 140 auszugeben bzw. weiterzuleiten.

Die Erzeugungseinrichtung 140 ist ausgebildet, um das Seitenaufprallwarnsignal von der Einleseeinrichtung 130 zu empfangen. Die Erzeugungseinrichtung 140 ist ausgebildet, um ein Ansteuersignal unter Verwendung des Seitenaufprallwarnsignals und einer Positionsinformation zu erzeugen, wobei die Positionsinformation eine Position des Fremdfahrzeugs relativ zu dem Fahrzeug repräsentiert. Dazu kann die Erzeugungseinrichtung 140 oder eine derselben zugeordneten Einrichtung optional die Positionsinformation bestimmen. Die Erzeugungseinrichtung 140 ist ausgebildet, um das Ansteuersignal an die Ansteuereinrichtung 150 auszugeben.

Die Ansteuereinrichtung 150 ist ausgebildet, um das Ansteuersignal von der Erzeugungseinrichtung 140 zu empfangen. Die Ansteuereinrichtung 150 ist ausgebildet, um die Lichtaussendung des zumindest einen Scheinwerfers basierend auf dem Ansteuersignal anzusteuern, um das Fremdfahrzeug mittels des zumindest einen Scheinwerfers zu beleuchten. Die Ansteuereinrichtung 150 kann dabei ausgebildet sein, um eine Steuerinformation zu erzeugen, welche die Ansteuerung repräsentiert und verwendet werden kann, um die Steuerung der Lichtaussendung durchzuführen. Die Ansteuereinrichtung 150 ist ausgebildet, um die Steuerinformation an das Scheinwerfersteuergerät 160 auszugeben.

Das Scheinwerfersteuergerät 160 ist ausgebildet, um die Steuerinformation von der Steuervorrichtung 120 bzw. der Ansteuereinrichtung 150 der Steuervorrichtung 120 zu empfangen. Das Scheinwerfersteuergerät 160 ist auch ausgebildet, um ein Steuersignal zur Steuerung der Scheinwerfer 170 zu erzeugen. Das Scheinwerfersteuergerät 160 kann bei der Erzeugung des Steuersignals die Steuerinformation zum Steuern der Lichtaussendung der Scheinwerfer 170 berücksichtigen bzw. verwenden. Das Steuersignal kann somit die Steuerinformation beinhalten, die basierend auf dem Ansteuersignal in der Steuervorrichtung 120 erzeugt wird. Das Scheinwerfersteuergerät 160 ist ausgebildet, um das Steuersignal an die Scheinwerfer 170 auszugeben.

Die Scheinwerfer 170 können das Steuersignal von dem Scheinwerfersteuergerät 160 empfangen. Die auf dem Ansteuersignal basierende Steuerinformation in dem Steuersignal kann bewirken, dass die Lichtaussendung der Scheinwerfer 170 gesteuert wird, um vor einem drohenden Seitenaufprall zu warnen.

Fig. 2 zeigt ein Ablaufdiagramm eines Verfahrens 200 zur Steuerung einer Lichtaussendung zumindest eines Scheinwerfers eines Fahrzeugs, gemäß einem Ausführungsbeispiel der vorliegenden Erfindung. Das Verfahren 200 weist einen Schritt des Einlesens 210 eines Seitenaufprallwarnsignals auf. Dabei repräsentiert das Seitenaufprallwarnsignal eine Gefahr eines Seitenaufpralls für das Fahrzeug durch ein Fremdfahrzeug. Das Verfahren 200 weist auch einen Schritt des Erzeugens 220 eines Ansteuersignals unter Verwendung des Seitenaufprallwarnsignals und einer Positionsinformation auf. Dabei repräsentiert die Positionsinformation eine Position des Fremdfahrzeugs relativ zu dem Fahrzeug. Das Verfahren 200 weist ferner einen Schritt des Ansteuerns 230 der Lichtaussendung des zumindest einen Scheinwerfers basierend auf dem Ansteuersignal auf, um das Fremdfahrzeug mittels des zumindest einen Scheinwerfers zu beleuchten. Das Verfahren 200 kann in Verbindung mit einer Vorrichtung, wie beispielsweise der Steuervorrichtung aus Fig. 1, vorteilhaft ausgeführt werden. Somit kann die Steuervorrichtung bzw. können die Einrichtungen der Steuervorrichtung aus Fig. 1 ausgebildet sein, um die Schritte des Verfahrens 200 durchzuführen.

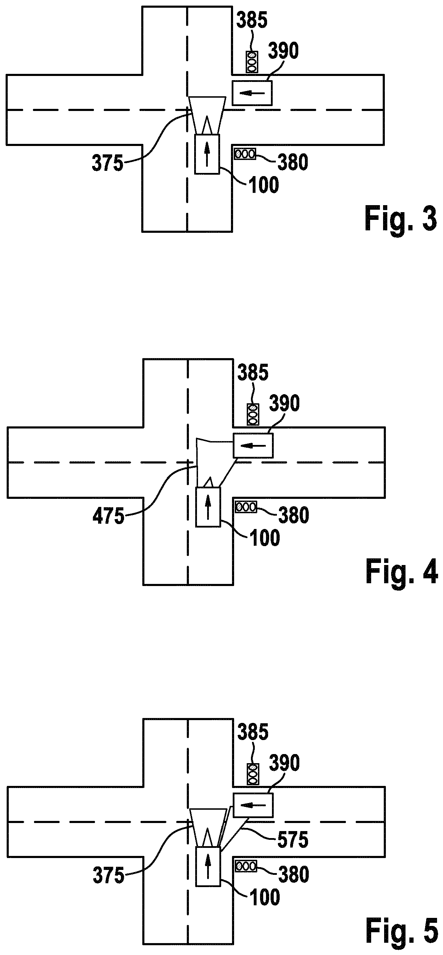

Fig. 3 zeigt eine schematische Darstellung einer Verkehrssituation mit einer Gefahr eines Seitenaufpralls zwischen einem Fahrzeug und einem Fremdfahrzeug. Insbesondere ist eine Straßenkreuzung mit einer Verkehrssituation gezeigt, die eine normale Seitenaufprallwarnfunktion als eine Gefahr eines Seitenaufprall interpretieren kann. Gezeigt sind ein Fahrzeug 100, ein Lichtkegel 375, eine erste Verkehrsampel 380, eine zweite Verkehrsampel 385 und ein Fremdfahrzeug 390. Im Bereich der Straßenkreuzung kreuzen sich eine erste Straße und eine zweite Straße. Das Fahrzeug 100 befindet sich auf der ersten Straße im Kreuzungsbereich in der Nähe der ersten Verkehrsampel 380. Das Fremdfahrzeug 390 befindet sich auf der zweiten Straße im Kreuzungsbereich in der Nähe der zweiten Verkehrsampel 385. Zur Veranschaulichung einer Fahrtrichtung des Fahrzeugs 100 sowie des Fremdfahrzeugs 390 ist ein Richtungspfeil an dem Fahrzeug 100 und ist ein weiterer Richtungspfeil an dem Fremdfahrzeug 390 abgebildet. Die Richtungspfeile geben an, dass die Fahrtrichtungen des Fahrzeugs 100 und des Fremdfahrzeugs 390 sich im Kreuzungsbereich schneiden. Somit ist zu erkennen, dass sich das Fahrzeug 100 und das Fremdfahrzeug 390 ungefähr im rechten Winkel aufeinander zubewegen. Somit besteht für das Fahrzeug 100 die Gefahr eines Seitenaufpralls durch das Fremdfahrzeug 390.

Das Fahrzeug 100 kann auch als Ego-Fahrzeug bezeichnet werden. Der Lichtkegel 375 ist durch zwei Frontscheinwerfer des Fahrzeugs 100 erzeugt. Genau gesagt ist der Lichtkegel 375 durch eine Lichtaussendung von zwei Frontscheinwerfern des Fahrzeugs 100 erzeugt. Dabei kann der Lichtkegel 375 beispielsweise einem Abblendlicht entsprechen oder ähnlich sein. Die Verkehrsampel 380, in deren Nähe sich das Fahrzeug 100 befindet, kann hierbei auf Grün stehen. Somit ist das Durchfahren der Straßenkreuzung für das Fahrzeug 100 momentan erlaubt.

Die zweite Verkehrsampel 385, in deren Nähe sich das Fremdfahrzeug 390 befindet, kann auf Rot stehen. Somit ist das Durchfahren der Straßenkreuzung für das Fremdfahrzeug 390 momentan nicht erlaubt. Das Fremdfahrzeug 390 befindet sich jedoch bereits teilweise zwischen der zweiten Verkehrsampel 385 und einem Schnittpunkt der beiden Straßen im Kreuzungsmittelpunkt. Beispielsweise kann ein Fahrer des Fremdfahrzeugs 390 die auf Rot stehende zweite Verkehrsampel 385 übersehen haben. Somit handelt es sich bei dem Fremdfahrzeug 390 um ein Fahrzeug mit möglichem Unfallrisiko.

Ein herkömmliches Seitenaufprallwarnsystem kann nun eine Warnung an den Fahrer des Fahrzeugs 100 hinsichtlich eines möglichen Seitenaufpralls ausgeben. Wenn es sich bei dem Fahrzeug 100 jedoch um das Fahrzeug aus Fig. 1 handelt, kann aufgrund der in Fig. 3 gezeigten Verkehrssituation ein Verfahren zur Steuerung der Lichtaussendung gemäß Fig. 2 ausgeführt werden und beispielsweise ein Seitenaufprallwarnsignal eingelesen werden.

Fig. 4 zeigt eine schematische Darstellung einer Verkehrssituation mit einer Gefahr eines Seitenaufpralls zwischen einem Fahrzeug und einem Fremdfahrzeug. Die Darstellung in Fig. 4 entspricht hierbei der Darstellung aus Fig. 3 mit der Ausnahme, dass in Fig. 4 ein veränderter Lichtkegel 475 des Fahrzeugs 100 gezeigt ist. Bei dem Fahrzeug 100 handelt es sich hierbei um das Fahrzeug aus Fig. 1. Der veränderte Lichtkegel 475 entsteht durch Anwendung des Verfahrens aus Fig. 2 auf die Lichtaussendung des Fahrzeugs 100. Hierbei wird die Lichtaussendung des Fahrzeugs 100 so gesteuert, dass der veränderte Lichtkegel 475 in Richtung des Fremdfahrzeugs 390 geschwenkt ist und das Fremdfahrzeug 390 durch die Lichtaussendung des Fahrzeugs 100 zumindest teilweise beleuchtet ist. Somit ergibt sich eine Seitenaufprallwarnung mit Beleuchtung des Fremdfahrzeugs 390 unter Verwendung einer beispielsweise intelligenten Lichtsteuerung, z. B. IHC. Somit kann die Beleuchtung des Fremdfahrzeugs 390 bzw. des potentiellen Unfallbeteiligten eine Warnung an den Fahrer des Fahrzeugs 100 repräsentieren, dass ein Seitenaufprall unter Beteiligung des Fremdfahrzeugs 390 möglich ist.

Fig. 5 zeigt eine schematische Darstellung einer Verkehrssituation mit einer Gefahr eines Seitenaufpralls zwischen einem Fahrzeug und einem Fremdfahrzeug. Die Darstellung in Fig. 5 entspricht dabei der Darstellung aus Fig. 3 mit der Ausnahme, dass zusätzlich ein weiterer Lichtkegel 575 gezeigt ist. Bei dem Fahrzeug 100 handelt es sich hierbei um das Fahrzeug aus Fig. 1. Der weitere Lichtkegel 575 kann durch die Lichtaussendung eines Seitenaufprallwarnscheinwerfers erzeugt sein. Somit weist das Fahrzeug 100 zusätzlich zu dem Fahrzeug aus Fig. 1 den Seitenaufprallwarnscheinwerfer auf. Der Seitenaufprallwarnscheinwerfer kann eine oder mehrere Warnlampen aufweisen. Der weitere Lichtkegel 575 entsteht durch Anwendung des Verfahrens aus Fig. 2 auf die Lichtaussendung des Fahrzeugs 100. Hierbei wird die Lichtaussendung des Fahrzeugs 100 so gesteuert, dass der weitere Lichtkegel 575 in Richtung des Fremdfahrzeugs 390 gerichtet ist und das Fremdfahrzeug 390 durch die Lichtaussendung des Fahrzeugs 100 zumindest teilweise beleuchtet ist. Es ergibt sich eine Seitenaufprallwarnung für den Fahrer des Fahrzeugs 100 mit Beleuchtung des Fremdfahrzeugs 390 bzw. des potentiellen Unfallbeteiligten unter Verwendung des Seitenaufprallwarnscheinwerfers bzw. spezieller Warnlampen.

Im Folgenden werden verschiedene Ausführungsbeispiele der vorliegenden Erfindung unter Bezugnahme auf die Figuren 1 bis 5 zusammenfassend erläutert. Der Ablauf der Funktion Seitenaufprallwarnung mit Beleuchtung nach dem Verfahren 200 gemäß dem in Fig. 2 dargestellten Ausführungsbeispiel bzw. unter Verwendung der Steuervorrichtung 120 aus Fig. 1 stellt sich wie folgt dar. Wenn zum Beispiel bei Nacht ein möglicher Seitenaufprall erfasst wird, lenkt die intelligente Scheinwerfersteuerung den Scheinwerferkegel 475 ansprechend auf eine Ausführung des Verfahrens 200 bzw. basierend auf dem in der Steuervorrichtung 120 erzeugten Ansteuersignal so, dass das andere Fahrzeug beleuchtet wird. Gegebenenfalls kann dies unter Verwendung einer seitlichen Schwenksteuerung des Frontscheinwerfers 170 erfolgen. Alternativ oder zusätzlich kann eine andere Abstrahlcharakteristik des Frontscheinwerfers 170 durch die Ansteuerung der Lichtaussendung verändert werden. Bei Tag schaltet beispielsweise die intelligente Scheinwerfersteuerung im Falle eines möglichen Seitenaufpralls ansprechend auf eine Ausführung des Verfahrens 200 bzw. basierend auf dem in der Steuervorrichtung 120 erzeugten Ansteuersignal die Frontscheinwerfer 170 ein und lenkt den Scheinwerferkegel 475 auf das Fremdfahrzeug 390 als Warnung an dessen Fahrer.

Ein Ablauf der Seitenaufprallwarnfunktion mit Beleuchtung gemäß einem Ausführungsbeispiel der vorliegenden Erfindung kann demnach wie folgt lauten. Zunächst wird bei der Seitenaufprallwarnfunktion ein möglicher Seitenaufprall erfasst. Dann wird eine Relativposition des Zielfahrzeugs bzw. Fremdfahrzeugs 390 bezüglich des Ego-Fahrzeugs bzw. Fahrzeugs 100 berechnet. Dann wird die Relativposition des Zielfahrzeugs bzw. Fremdfahrzeugs 390 zusammen mit einem Signal, das angibt, dass eine Seitenaufprallwarnung aktiv ist, an die Einheit der intelligenten Scheinwerfersteuerung übertragen. Die Einheit der intelligenten Scheinwerfersteuerung stellt daraufhin den Lichtkegel so ein, dass das Fahrzeug mit einem möglichen Unfallrisiko beleuchtet wird. Dabei kann der Lichtkegel seitwärts erweitert werden. Es können auch die Frontscheinwerfer eingeschaltet werden, wenn sie noch ausgeschaltet sind.

Gemäß einem weiteren Ausführungsbeispiel der vorliegenden Erfindung können spezielle Seitenaufprallwarnscheinwerfer vorgesehen sein, die beispielsweise mit Seitenaufprallwarnkameras montiert sein können. Diese Seitenaufprallwarnscheinwerfer können eingeschaltet werden, um bei Unfallgefahr das sich von der Seite nähernde Fremdfahrzeug 390 zu beleuchten. In diesem Fall brauchen die Frontscheinwerfer 170 des Fahrzeugs 100 in ihrer Lichtaussendung nicht zwangsläufig ebenfalls verändert werden. Dies kann jedoch gemäß einem weiteren Ausführungsbeispiel vorgesehen sein.

Somit ergibt sich eine Verbesserung gegenüber einer nicht mit einer intelligenten Lichtsteuerung gekoppelten Seitenaufprallwarnfunktion. Für das Ego-Fahrzeug wird eine bessere Beleuchtung des Fremdfahrzeugs erreicht, mit dem ein Zusammenstoß droht. Für ein Fremdfahrzeug wird eine bessere Sichtbarkeit des Ego-Fahrzeugs im Fall einer Unfallgefahr erzielt.

## Patentansprüche

1. Verfahren (200) zur Steuerung einer Lichtaussendung zumindest eines Scheinwerfers (170) eines Fahrzeugs (100), wobei das Verfahren folgende Schritte aufweist:
Einlesen (210) eines Seitenaufprallwarnsignals, wobei das Seitenaufprallwarnsignal eine Gefahr eines Seitenaufpralls für das Fahrzeug (100) durch ein Fremdfahrzeug (390) repräsentiert;
Erzeugen (220) eines Ansteuersignals unter Verwendung des Seitenaufprallwarnsignals und einer Positionsinformation, wobei die Positionsinformation eine Position des Fremdfahrzeugs (390) relativ zu dem Fahrzeug (100) repräsentiert;
Ansteuern (230) der Lichtaussendung des zumindest einen Scheinwerfers (170) basierend auf dem Ansteuersignal, um das Fremdfahrzeug (390) mittels des zumindest einen Scheinwerfers (170) zu beleuchten;
**gekennzeichnet durch** folgenden Schritt:
Verifizieren, ob das Fremdfahrzeug (390) mittels des zumindest einen Scheinwerfers (170) beleuchtet wird, unter Verwendung einer optischen Erfassungseinrichtung (110).

2. Verfahren (200) gemäß Anspruch 1, **dadurch gekennzeichnet, dass** im Schritt des Einlesens (210) das Seitenaufprallwarnsignal von einer optischen Erfassungseinrichtung (110) und/oder einer Radarerfassungseinrichtung empfangen wird.

3. Verfahren (200) gemäß einem der vorangegangenen Ansprüche, **dadurch gekennzeichnet, dass** im Schritt des Ansteuerns (230) die Lichtaussendung des zumindest einen Scheinwerfers (170) in Richtung des Fremdfahrzeugs (390) gelenkt wird und/oder die Lichtaussendung des zumindest einen Scheinwerfers (170) aktiviert wird.

4. Verfahren (200) gemäß einem der vorangegangenen Ansprüche, **dadurch gekennzeichnet, dass** im Schritt des Ansteuerns (230) eine Lichtaussendung zumindest eines Frontscheinwerfers (170) des Fahrzeugs (100) und/oder eine Lichtaussendung eines Seitenaufprallwarnscheinwerfers des Fahrzeugs (100) angesteuert wird.

5. Verfahren (200) gemäß einem der vorangegangenen Ansprüche,
**gekennzeichnet durch** einen Schritt des Bestimmens der Positionsinformation basierend auf Bilddaten und/oder Radardaten, wobei im Schritt des Erzeugens (220) das Seitenaufprallwarnsignal und die bestimmte Positionsinformation verwendet werden, um das Ansteuersignal zu erzeugen.

6. Verfahren (200) gemäß einem der vorangegangenen Ansprüche,
**gekennzeichnet durch** einen Schritt des Aussendens von Licht mittels des zumindest einen Scheinwerfers (170) ansprechend auf den Schritt des Ansteuerns (230).

7. Vorrichtung, die ausgebildet ist, um die Schritte des Verfahrens (200) gemäß einem der Ansprüche 1 bis 6 durchzuführen.

8. Computerprogrammprodukt mit Programmcode zur Durchführung des Verfahrens (200) nach einem der Ansprüche 1 bis 6, wenn das Programm auf einer Vorrichtung ausgeführt wird.

## Claims

1. Method (200) for controlling a light emission of at least one headlight (170) of a vehicle (100), wherein the method comprises the following steps:
reading in (210) a side crash warning signal, wherein the side crash warning signal represents a risk of a side crash for the vehicle (100) as a result of a third-party vehicle (390);
generating (220) an actuation signal using the side crash warning signal and position information, wherein the position information represents a position of the third-party vehicle (390) relative to the vehicle (100);
actuating (230) the light emission of the at least one headlight (170) on the basis of the actuation signal in order to illuminate the third-party vehicle (390) by means of the at least one headlight (170);
**characterized by** the following step:
verifying whether the third-party vehicle (390) is illuminated by means of the at least one headlight (170), using an optical detection device (110).

2. Method (200) according to Claim 1, **characterized in that** in the step of reading in (210), the side crash warning signal is received from an optical detection device (110) and/or a radar detection device.

3. Method (200) according to either of the preceding claims, **characterized in that** in the step of actuating (230), the light emission of the at least one headlight (170) is directed in the direction of the third-party vehicle (390) and/or the light emission of the at least one headlight (170) is activated.

4. Method (200) according to any of the preceding claims, **characterized in that** in the step of actuating (230), a light emission of at least one front headlight (170) of the vehicle (100) and/or a light emission of a side crash warning headlight of the vehicle (100) are/is actuated.

5. Method (200) according to any of the preceding claims, **characterized by** a step of determining the position information on the basis of image data and/or radar data, wherein in the step of generating (220), the side crash warning signal and the position information determined are used to generate the actuation signal.

6. Method (200) according to any of the preceding claims, **characterized by** a step of emitting light by means of the at least one headlight (170) in response to the step of actuating (230).

7. Apparatus configured to carry out the steps of the method (200) according to any of Claims 1 to 6.

8. Computer program product comprising program code for carrying out the method (200) according to any of Claims 1 to 6 if the program is executed on an apparatus.

## Revendications

1. Procédé (200) de régulation d'une émission lumineuse d'un phare (170) d'un véhicule (100), dans lequel le procédé présente les étapes suivantes:
lire (210) un signal d'avertissement de collision latérale, dans lequel le signal d'avertissement de collision latérale représente un danger d'une collision latérale pour le véhicule (100) par un véhicule étranger (390) ;
produire (220) un signal de commande en utilisant le signal d'avertissement de collision latérale et une information de position, dans lequel l'information de position représente une position du véhicule étranger (390) par rapport au véhicule (100);
commander (230) l'émission lumineuse dudit au moins un phare (170) en se basant sur le signal de commande, afin d'éclairer le véhicule étranger (390) au moyen dudit au moins un phare (170);
**caractérisé par** l'étape suivante:
vérifier si le véhicule étranger (390) est éclairé au moyen dudit au moins un phare (170), en utilisant un dispositif de détection optique (110).

2. Procédé (200) selon la revendication 1, **caractérisé en ce qu'**à l'étape de lecture (210) le signal d'avertissement de collision latérale est reçu par un dispositif de détection optique (110) et/ou par un dispositif de détection par radar.

3. Procédé (200) selon l'une quelconque des revendications précédentes, **caractérisé en ce qu'**à l'étape de commande (230) l'émission lumineuse dudit au moins un phare (170) est déviée en direction du véhicule étranger (390) et/ou l'émission lumineuse dudit au moins un phare (170) est activée.

4. Procédé (200) selon l'une quelconque des revendications précédentes, **caractérisé en ce qu'**à l'étape de commande (230) on commande une émission lumineuse d'au moins un phare avant (170) du véhicule (100) et/ou une émission lumineuse d'un phare d'avertissement de collision latérale du véhicule (100).

5. Procédé (200) selon l'une quelconque des revendications précédentes, **caractérisé par** une étape de détermination de l'information de position en se basant sur des données d'image et/ou des données de radar, dans lequel à l'étape de production (220) on utilise le signal d'avertissement de collision latérale et l'information de position déterminée pour produire le signal de commande.

6. Procédé (200) selon l'une quelconque des revendications précédentes, **caractérisé par** une étape d'émission de lumière au moyen dudit au moins un phare (170) en réponse à l'étape de commande (230).

7. Dispositif, qui est configuré pour exécuter les étapes du procédé (200) selon l'une quelconque des revendications 1 à 6.

8. Programme informatique avec code de programme pour l'exécution du procédé (200) selon l'une quelconque des revendications 1 à 6, lorsque le programme est exécuté sur un dispositif.
